# EUROPEAN PATENT APPLICATION

(11) **EP 1 178 675 A1**
(43) Date of publication of application: **06.02.2002**
(21) Application number: 00306553.9
(22) Date of filing: 01.08.2000
(51) Int. Cl.: H04N 5/00

(54) **Digital content remote access and playbackchip**

(71) Applicant: Artic Semiconductor Corp., Hsinchu (TW); Topic Semiconductor Corp., Hsinchu (TW)
(72) Inventor: Lo, Morris, Hsinchu (TW); Ke, Chieh-Yuan, Hsinchu (TW)
(74) Representative: Foster, Mark Charles

(57) **Abstract**

A digital content remote access and playback chip 30 comprising of a digital signal processor 36 and a microprocessor 38. The digital signal processor 36 and microprocessor 38 are used for downloading user-selected digital data from an external system 34 connected to the digital signal processor 36. The microprocessor 38 is capable of sending a user identification signal to the external system so that the external system 34 is able to verify the identity of the user. The external system 34 encrypts and compresses the requested digital data before sending it to the digital signal processor 36 and microprocessor 38. The microprocessor 38 and digital signal processor 36 decrypt and decompress the digital data before displaying the data on a display device.

## Description

### BACKGROUND OF THE INVENTION

### Field of Invention

The present invention relates to remote access and playback of digital content. More particularly, the present invention relates to a digital content remote access and playback chip, device and charge accounting system obtained by the integration of a modem, a computer and a playback device.

### Description of Related Art

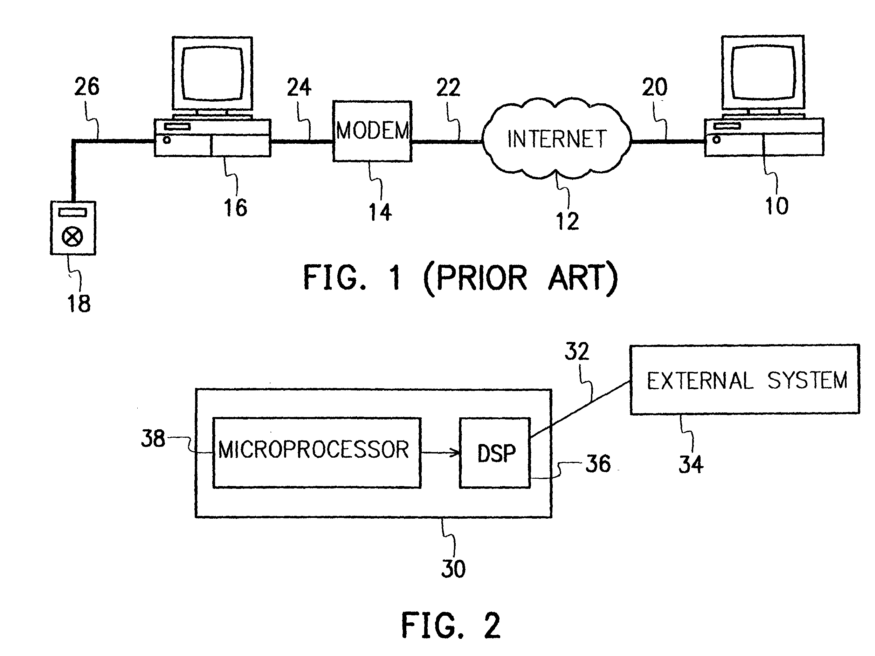

Conventionally, to carry out remote access and playback of digital content such as downloading digital data from an Internet, a digital content remote access and playback system such as the one shown in Fig. 1 must be used. As shown in Fig. 1, a digital content remote access and playback system includes a server 10, an Internet 12, a modem 14, a computer 16 and a playback device 18. In general, transmission between the server 10 and the Internet 12 is carried out using a dedicated line or a wide bandwidth cable 20 while transmission between the Internet 12 and the modem 14 is carried out using a telephone wire 22. The modem 14 and the computer 16 communicate with each other through a cable 24. Similarly, the computer 16 and the playback device 18 communicate with each other through a cable 26. The following is a more detailed description of the digital content remote access and playback system.

First, a user must use the computer 16 to set up a contact address of a particular network station and a corresponding telephone number for data input. The address and telephone number are sent to the modem 14 via a transmission cable 24. The modem 14 dials up to connect with the remote server 10 or an Internet service provider (ISP). Communication between the computer 16 and the server 10 is achieved through TCP/IP or other types of protocols. An application software inside the computer 16 is used to determine the desired content to be downloaded or transmitted. Data are subsequently downloaded or transmitted consecutively according to commands issued by the software. A digital processor (DSP) engine inside the modem 14 converts the signals picked up from the telephone wire 22 into digital data. The digital data is transmitted back to the computer 16 through the transmission cable 24. The digital data is transmitted to the playback device 18 according to the special application software used inside the computer 16. The playback device 18 can be any type of instrument capable of processing music, voice, video, words or movie signals. On receiving digital data from a remote terminal, the playback device can initiate the playback of whatever type of data received. During playback, the microprocessor (not shown) and the DSP engine (not shown) first secure the header and frequency components. When the DSP engine has received digital data, the digital data is transmitted to a digital-to-analogue converter (not shown) so that music, voice, words or video images are displayed.

The aforementioned remote access and playback method requires a system having at least a modem, a computer, a playback device and relevant computer software to capture the required data. For a user who demands music, voice, words or video data, such a system is too costly because of the devices that need to be purchased (modem, computer and playback device). Moreover, the user has to handle sophisticated software inside the computer. Hence, the system is unsuitable for general users because normally only a few simple operations (plugging into a power source, connecting wires to a telephone jack or pressing a few buttons on the playback device) are expected. In addition, digital content providers of music, voice, words or video data must profit by selling the right to use the data to users. If the data can simply be downloaded onto a computer, a vast number of copies can be made and distributed to unauthorized users without paying a fee. Therefore, the providers may incur immense monetary losses.

### SUMMARY OF THE INVENTION

Accordingly, one object of the present invention is to provide a digital content remote access and playback chip, device and a charge accounting system by integrating a modem, a computer and a playback device. Hence, production costs are lowered and downloading and playback operations are simplified. Furthermore, an integrated chip or device that combines the function of a modem, a computer and a playback device can offer data providers more control over authorization and copyright protection.

To achieve these and other advantages and in accordance with the purpose of the invention, as embodied and broadly described herein, the invention provides a digital content remote access and playback chip for downloading digital data from an external system. The digital content remote access and playback chip includes a digital signal processor and a microprocessor. The digital signal processor controls the establishment of a connection with the external system and the downloading of digital data. The microprocessor is connected to the digital signal processor. When the digital signal processor and the external system are linked together, the microprocessor will issue a user identification signal and a signal for selecting the type of digital content desired from the external system. These signals are transferred to the external system via the digital signal processor so that the external system can carry out user identification. After proper encryption of the desired digital content, the encrypted data are transmitted to the digital signal processor and the microprocessor so that the data can be decrypted and decompressed before the data is played back. The external system can be connected through an Internet or a server.

This invention also provides a digital content remote access and playback device that uses a transmission line to connect to a server. The device includes a digital content remote access and playback chip, a memory unit, a display unit, an input controller and a sound output device. The digital content remote access and display chip is used for automatically receiving, downloading and decrypting the digital content provided by the server. The memory unit is connected to the digital content remote access and playback chip for holding the digital data. The display device is connected to the digital content remote access and playback chip for showing the digital content and for playback. The input controller is also connected to the digital content remote access and display chip for selecting the type of digital content and functions from the server. The sound output device translates digital sound into sound signals for output.

The transmission line can be a telephone wire or an optical fiber. The transmission line is connected to the server. An Internet can be included in the connection. One end of the transmission line is connected to the Internet while the other end of the transmission line is connected to the server via a dedicated line or a wide bandwidth line. In addition, the display can be a liquid crystal display or module. The display is capable of showing the title of a piece of music, the composer and other relevant information. Moreover, the display is capable of showing images, video data, words, movies and so on. The input controller can be a keypad. In addition, a battery can be included for providing a power source at the digital content remote access and playback device. The sound output device can be a pair of headphones or a set of loudspeakers.

This invention also provides an accounting method for charging the user of a digital content remote access and playback system. An Internet content provider (ICP) provides digital data. An Internet service provider (ISP) then provides a connection with the Internet content provider (ICP) so that the digital data can be displayed. A user utilizes a digital content remote access and playback device to link up with the Internet service provider (ISP) and the Internet content provider (ICP). After performing a user identification and content selection procedure, the Internet content provider encrypts the digital data and initiates a cumulative or a fix-period charging program at the same time. The encrypted data is downloaded to the digital content remote access and playback device.

The cumulative charging program can charge a fee according to total access time accumulated or the frequency of access by a particular user. The user can pay the ICP or ISP for the services.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a sketch of a conventional digital content remote access and playback system;
Fig. 2 is a block diagram of a digital content remote access and playback chip and related connections according to a first preferred embodiment of this invention;
Fig. 3 is a block diagram of a digital content remote access and playback device and associated connections according to a second preferred embodiment of this invention;
Fig. 4 is a flow chart showing a fee-charging method for charging the user of a digital content remote access and playback device of this invention; and
Fig. 5 is a diagram showing a fee-paying scheme for the user of a digital content remote access and playback device of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

Fig. 2 is a block diagram of a digital content remote access and playback chip and related connections according to a first preferred embodiment of this invention. As shown in Fig. 2, the digital content remote access and playback chip 30 is connected to an external system 34 using a transmission line 32. The external system provides digital data for downloading and includes, for example, the Internet 12, the dedicated line or wide bandwidth line 20 and the server 10 as shown in Fig. 1. The digital content remote access and playback chip 30 includes a digital signal processor (DSP) 36 and a microprocessor 38. The digital signal processor 36 is capable of controlling the connection with the external system 34 and capturing digital data sent by the external system 34. The microprocessor 38 is connected to the digital signal processor 36. The microprocessor 38 is capable of sending a user identification signal and a selection signal to the external system requesting the type of digital data or items.

According to this invention, digital content includes digital data such as music, voice, video, words, movies and so on. The server in the external system 34 can be an Internet service provider (ISP) and the digital content can be digital data provided by an Internet content provider (ICP) through the ISP, for example. Obviously, the ISP and ICP can be the same party. A more concrete application is the downloading and playback of digital music. At present, the most common compressed formats for transmitting digital music include MP3, WMA, ATRAC3, Vorbis and twin VQ. The Internet content providers include music production companies or music distributors. Accordingly, the selection signal should select music to be the digital content for downloading.

The digital content remote access and playback chip 30 integrates the modem 14, the computer 16 and the playback device 18 shown in Fig. 1 together. Inside the digital content remote access and playback chip 30, the destination telephone number and address of the desired network station has already been installed and communication protocols such as TCP/IP have already been set inside the chip 30. In addition, compression/decompression and modulation/demodulation functions of a normal modem are integrated together. Hence, as long as the digital signal processor 36 is connected to the external system 34, a user can communicate with the external system 34. In other words, a user is able to communicate with a server linked to an Internet by simply connecting the chip 30 to a telephone line and pressing a few keys. After setting up a communication link, the user can select the desired data from the server. The selection of digital content can be achieved by keying in necessary commands from a keyboard. The microprocessor 38 sends out a user identification signal to the external system 34 via the digital signal processor 36. Upon receiving the user identification signal, the external system 34 runs a search in its internal database to determine the user's identity and limit of authority before initializing a usage-fee accumulation program.

When the user is identified, the external system 34 will encrypt the requested digital data so that the digital data can be played only on requester's chip or device. Any attempts to copy or distribute the digital data to third parties without authority will fail. The encrypted digital data are sent to the digital signal processor and the microprocessor. According to commands issued by the user, the data is decrypted and decompressed so that the requested digital content can be played at the user's location.

In the aforementioned embodiment, although a microprocessor is used to perform the function of a modem, computer and playback device and some other related functions, actual applications are not limited to this configuration. In other words, two less powerful microprocessors or more than one microprocessor can be used.

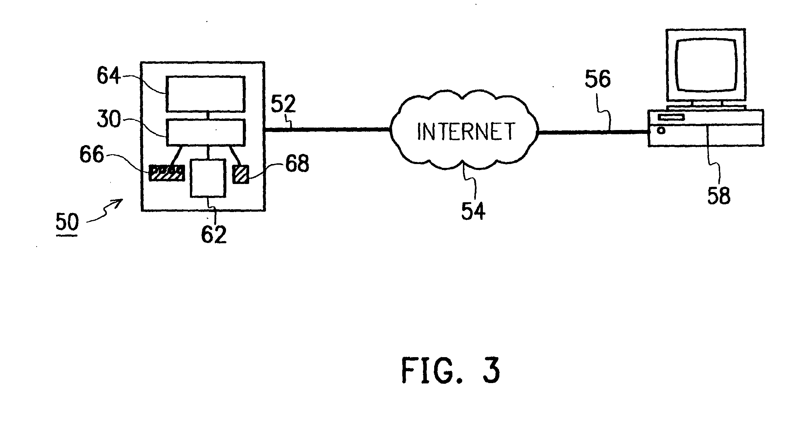

Fig. 3 is a block diagram of a digital content remote access and playback device and associated connections according to a second preferred embodiment of this invention. As shown in Fig. 3, the digital content remote access and playback device 50 includes a digital content remote access and playback chip 30 (identical to the digital content remote access and playback chip in Fig. 2, hence the same label is used), a memory unit 62, a display device 64, an input controller 66 and a sound output device 68. The digital content remote access and playback chip 30 functions as a device for automatically downloading digital data from a server 58. Since detailed operation of the chip 30 has been explained before, description is not repeated here. The memory unit 62 is connected to the chip 30 for holding downloaded data. The display device 64 can be a liquid crystal display or a liquid crystal display module, for example. The display device 64 is able to show the flow of digital data in a playback operation and display related information such as the title of a piece of digital music and its composer. In addition, images, video data, words or movies and so on can also be displayed by the display device 64.

The input controller 66 can be a keypad that connects with the digital content remote access and playback chip 30 for selecting the type of digital data from the server such as a particular song or piece of music. The sound output device 68 is actually a translator for converting digital data into digital sound. Therefore, the sound output device 68 at least includes a pair of headphones or a set of loudspeakers. In addition, a battery may also be included serving as a power source for the digital content remote access and playback device 50.

According to the second embodiment of this invention, a user only has to plug a telephone cable or an optical fiber 52 into a telephone jack or a fiber-optic socket and then switch on the power (or press an initialization button), the digital content remote access and playback device 52 will automatically dial a built-in telephone number and get a network address for accessing the server 58 of an ISP via an Internet 54. The device 50 will also issue a user identification signal to the server 58. On receiving the identification signal, the server 58 will perform user identification. After establishing the identity of the user, the user is permitted to specify the desired digital content (such as a particular song for downloading) through a keyboard. The selection signal is transmitted from the device to the server 58. The selected piece of music is encrypted by the server 58 before sending it to the device 50 for downloading into the memory unit 62.

The device 50 can be designed in such a way that power to the device 50 will be automatically shut down if no other user operations are sensed after a pre-defined period of time following a completed download. Therefore, the user does not have to waste time waiting for the download.

Thereafter, the user can play back the downloaded digital content at any time. To play back the digital content, the digital content remote access and playback chip 30 reads the digital data from the memory unit 62. The digital data is decompressed and decrypted before playing the digital content using the sound output device 68 and/or the display device 64.

Through the invention of a digital content remote access and playback chip or device, an accounting method for charging digital content remote access and playback system users is developed.

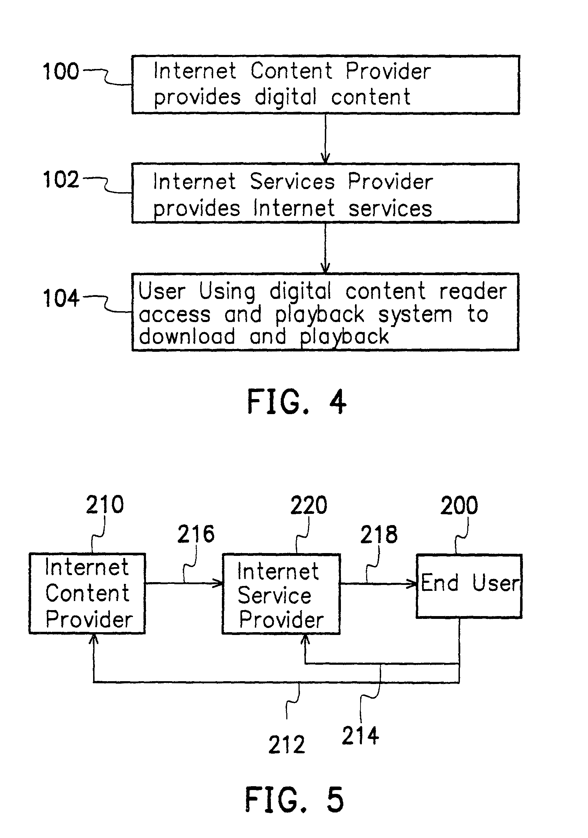

Fig. 4 is a flow chart showing a fee-charging method for charging the user of a digital content remote access and playback device of this invention. In step 100, digital content is provided by an Internet content provider (ICP). In step 102, the ICP is connected to an Internet service provider (ISP). The ISP provides networking services so that digital content can be freely transferred. In step 104, a user having a digital content remote access and playback device is connected to the ICP via the ISP. Once the user's identity is ascertained at the ICP end and the particular digital content selected, the ICP encrypts the requested data and begins to transmit the encrypted data to the particular user. In the meantime, a fee-charging program is initiated for that particular user. The encrypted data is downloaded into the memory of the digital content remote access and playback device at the user's end. Besides a cumulative charging method, the user can be charged according to a monthly rate or a fixed yearly rate. Alternatively, perhaps only a membership fee is charged or is free of charge for a particular period.

The cumulative charging method can be further divided into a plan that charges according to accumulated time and a plan that charges according to frequency of use. Fig. 5 is a diagram showing a fee-paying scheme for the user of a digital content remote access and playback device of this invention. As shown in Fig. 5, the end user 200 can pay an Internet content provider (ICP) 210 (such as a music company) via a first channel 212. Alternatively, the end user can pay an Internet service provider (ISP) 220 via a second channel 214. Digital content is sent from the ICP 210 to the ISP 220 via a third channel 216 and then transferred to the end user 200 via a fourth channel 218.

In summary, a major aspect of this invention is the provision of a digital content remote access and playback chip, device and charge accounting method. By integrating the functions of modem, computer and playback device on a single chip, not only is production cost greatly reduced, steps for operating the system are very much simplified. Furthermore, only authorized users are permitted to use whatever digital data is provided by a content provider. Therefore, unauthorized copying or access is prevented, leading to a better profit margin for the digital content providers.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A digital content remote access and playback chip for downloading digital data from an external system, comprising:
a digital signal processor connected to an external system for controlling connection to the external system and capturing digital data from the external system; and
a microprocessor connected to the digital signal processor, wherein the microprocessor is capable of issuing a user identification signal and a selection signal for requesting a particular type of digital data from the external system, the signals are sent to the external system via the digital signal processor so that the external system is able to assess the identity and authority of the user, if permission is granted to the user, the requested type of digital content is encrypted and compressed and transferred to the digital signal processor and the microprocessor for decryption and decompression, and finally the decrypted and decompressed digital data is played at the user's end.

2. The chip of claim 1, wherein the external system includes a server connected through an Internet.

3. The chip of claim 1, wherein the microprocessor first issues a user identification signal to the external system where validity of the signal is checked, and the microprocessor is permitted to send a selection signal to the external system requesting the type of digital data only after user identity is positively verified.

4. A digital content remote access and playback device for connecting to a server via a transmission line, comprising:
a digital content remote access and playback chip for automatically downloading and decrypting digital data provided by the server;
a memory unit connected to the digital content remote access and playback chip for holding downloaded data;
a display device connected to the digital content remote access and playback chip; and
an input controller connected to the digital content remote access and playback chip for selecting the type of digital content provided by the server.

5. The device of claim 4, wherein the device further includes a sound output device that connects to the digital content remote access and playback chip for converting digital content into digital sound.

6. The device of claim 5, wherein the transmission line includes a telephone line.

7. The device of claim 5, wherein the transmission line for connecting with the server further includes an Internet with one end connected to the transmission line and the other end connected to the server via a dedicated line.

8. The device of claim 5, wherein the display device includes a liquid crystal display unit.

9. The device of claim 5, wherein the input controller includes a keypad.

10. The device of claim 5, wherein the device further includes a battery for providing a power source to the digital content remote access and playback device.

11. The device of claim 5, wherein the sound output device includes a headphone .

12. The device of claim 5, wherein the sound output device includes a loudspeaker.

13. The device of claim 5, wherein the digital content remote access and playback chip further includes:
a digital signal processor connected to the external system for controlling connection to the external system and capturing digital data from the external system; and
a microprocessor connected to the digital signal processor, wherein the microprocessor is capable of issuing a user identification signal and a selection signal for requesting a particular type of digital data from the external system, the signals are sent to the external system via the digital signal processor so that the external system is able to assess the identity and authority of the user, if permission is granted to the user, the requested type of digital content is encrypted and compressed and transferred to the digital signal processor and the microprocessor for decryption and decompression, and finally the decrypted and decompressed digital data is played at the user's end.

14. A charge accounting method for a user of a digital content remote access and playback system, comprising :
providing digital content through an Internet content provider;
connecting the Internet content provider to an Internet service provider so that digital content can be transferred; and
connecting the digital content remote access and playback device of a user to the Internet content provider via the Internet service provider, wherein the Internet content provider is able to validate authority of the user through an identification procedure and accept user's request for a particular type of digital content, thereafter, the Internet content provider then encrypts the requested data and at the same time initiates a cumulative or fixed period payment-charging program, and finally the digital content remote access and playback device at the user's side downloads the encrypted data.

15. The charge accounting method of claim 14, wherein the cumulative payment-charging program adds together separate on-line periods with the Internet content provider.

16. The charge accounting method of claim 14, wherein the cumulative payment-charging program adds together the number of on-line accesses to the Internet content provider.

17. The charge accounting method of claim 14, wherein the user pays the Internet content provider.

18. The charge accounting method of claim 14, wherein the user pays the Internet service provider.
